# EUROPEAN PATENT SPECIFICATION

(11) **EP 1 669 215 B1**
(45) Date of publication and mention of the grant of the patent: **21.11.2007**
(21) Application number: 04257629.8
(22) Date of filing: 08.12.2004
(51) Int. Cl.: B60C 7/10, B29D 30/54

(54) **Retreaded solid tire and method of producing same**
Runderneuerter Vollreifen und Methode dessen Herstellung
Bandage plein réchapé et son procédé de fabrication

(43) Date of publication of application: 14.06.2006
(73) Proprietor: MAEDA SHELL SERVICE CO., LTD., Okazaki-shi Aichi-ken 444-3501 (JP)
(72) Inventor: Maeda, Sadao c/o Maeda Shell Service Co.,Ltd., Okazaki-shi, Aichi-ken 444-3501 (JP)
(74) Representative: Paget, Hugh Charles Edward

(56) References cited:
- US-A- 3 666 724
- US-A- 4 164 251
- US-A- 4 435 456
- PATENT ABSTRACTS OF JAPAN vol. 2002, no. 09, 4 September 2002 (2002-09-04) & JP 2002 144442 A (DANTEC CO LTD), 21 May 2002 (2002-05-21)
- PATENT ABSTRACTS OF JAPAN vol. 018, no. 335 (M-1627), 24 June 1994 (1994-06-24) & JP 06 079808 A (SUMITOMO RUBBER IND LTD), 22 March 1994 (1994-03-22)

## Description

### BACKGROUND OF THE INVENTION

### Field of the Invention

The present invention relates to a renewed solid tire and a method of producing the same, and particularly to advantageous techniques for renewing worn solid rubber tires.

### Discussion of Related Art

As a tire that supports, in a vehicle such as an automotive vehicle or an industrial vehicle, a load and has the function of smoothly transmitting forces between the vehicle and road surface, there have conventionally been known two sorts of tires, i.e., a pneumatic tire having a hollow structure in which air is charged, and a solid tire having a solid structure constituted by a rubber-based annular body. In particular, the solid tire enjoys, as tire's functions, a load supporting property, a cushioning property, and a rubber elasticity, and is widely used in low-speed and high-load vehicles such as a forklift truck, an industrial tractor, a battery carrier, or a trailer. As predominant sorts of the solid tire, there are known a tire that is constituted by a single tread rubber and is directly bonded to a wheel, a tire that is constituted by a rubber adhered, by vulcanization, to a base band and is press-fitted onto a wheel, and a tire that is constituted by an annular tread rubber and is fitted on an outer circumferential portion of a wheel.

Generally, the solid tire is known as a solid rubber tire that is constituted by a tread rubber formed of, e.g., NR or SBR. Since the solid rubber tire contacts the road surface and produces a frictional force to allow movement of the vehicle, a surface of contact of the tire with the road surface is worn little by little as the tire is used for a long time and, if a life expectancy of the tire is fulfilled, the tire should be disposed of. Recently, however, the disposal of waste tires has become a serious social problem. In particular, since the solid rubber tires are heavier than pneumatic tires used in, e.g., passenger cars, the solid rubber tires are more difficult to handle. In addition, the solid rubber tires are hard to burn or find other applications. Thus, the solid rubber tires are very difficult to dispose of.

In the above-indicated technical background, Patent Document 1 (Japanese Patent Application Publication No. 5-31822) has proposed a pneumatic-type solid tire having a structure in which a surface of a tread portion of a worn tire is subjected to buffing as a sort of polishing and a renewing tread rubber is adhered to the thus polished tread portion. According to this technique, worn tires that have conventionally been difficult to dispose of can be effectively utilized, tire materials can be saved, and times needed to produce tires can be reduced.

However, even though the renewing tread rubber may be adhered to the tread portion of the worn tire, so as to produce a renewed tire, the tread portion of the renewed tire is easily worn again as it is used. Thus, the durability of the tread portion of the renewed tire is not satisfactorily improved. In addition, since rubber materials used to form the renewing tread rubber contain carbon black as a reinforcing agent and accordingly have a black color, black marks of the tire are left on the road surface because frictions are produced between the tread rubber and the road surface. The black tire marks left on the road surface may damage an aesthetic appearance of the road surface and, in a work field where a forklift truck or an industrial tractor is used, not only the black tire marks but also black rubber powder resulting from wearing of tires may damage a work environment.

In addition, Patent Document 2 (Japanese Patent Application Publication No. 2002-144442) discloses a wheel renewing method in which urethane rubber is used. More specifically described, this document discloses a renewed wheel obtaining technique in which, after a rubber portion is removed from a base band of a waste tire, an ether-based urethane rubber layer is formed on an outer circumferential surface of the base band.

In the above-indicated renewed wheel, the urethane rubber layer contacts road surface. The urethane rubber has a higher wear resistance than that of a common tread rubber formed of, e.g., NR or SBR. Thus, the renewed wheel can enjoy a significantly improved durability or life expectancy. On the other hand, the renewed wheel suffers a lower cushioning property than that of a wheel having the common tread rubber. Therefore, when an operator operates a vehicle, such as a forklift truck or an industrial tractor, in which the renewed wheel is used, uncomfortable shocks may be transmitted to the operator. The cushioning property of the renewed wheel might be improved by forming the urethane rubber layer to have a foamed structure or largely lowering the hardness (or increasing the softness) of the urethane rubber layer. In this case, however, the urethane elastomer may lose its proper wear resistance and accordingly its durability.

US-A-4435456 describes repair of tires in which a urethane-polymer is used to plug or fill scratches, gauges, or otherwise torn portions or openings of tires.

### SUMMARY OF THE INVENTION

It is therefore an object of the present invention to provide a renewed solid tire that has not only an excellent wear resistance but also an excellent shock-absorbing or -damping property, and a method of advantageously producing the same. It is another object of the present invention to provide advantageous techniques for renewing a waste solid rubber tire that has been worn to such a degree that its life expectancy has been fulfilled.

According to a first aspect of the present invention, there is provided a renewed solid tire, as set out in claim 1.

In the renewed solid tire in accordance with the present invention, an annular tread portion to be attached to an outer circumferential portion of a wheel is constituted by the rubber layer that is a remaining portion of the worn solid rubber tire and has an appropriate thickness, and the room temperature-setting polyurethane elastomer layer that is integrally formed on the rubber layer. Therefore, impacts exerted from road surface to the tread portion can be effectively absorbed or damped by the rubber layer as an inner layer of the tread portion, and the outer polyurethane elastomer layer that provides a contact surface of the tread portion that contacts the road surface enjoys a proper excellent wear resistance of the polyurethane elastomer, and accordingly a significantly improved durability. Thus, the renewed solid tire can enjoy a significantly increased life expectancy.

In addition, the polyurethane elastomer layer as the outer layer of the tread portion of the renewed solid tire does not contain, unlike common rubber layers, any amounts of carbon black. Therefore, unlike conventional solid rubber tires, no black marks of the renewed solid tire (i.e., the tread rubber) are left on the road surface the tire contacts. Thus, the renewed solid tire is freed of the problems that the black marks may damage the aesthetic appearance of the road surface and that scattering of black rubber powder resulting from wearing of tires may damage a work environment. Moreover, the rubber layer as the remaining portion of the worn solid rubber tire is utilized, substantially as it is, as the inner layer of the tread portion of the renewed solid tire. Therefore, an amount of consumption of raw materials of the polyurethane elastomer can be significantly reduced as compared with the case where an entirety of the tread portion is constituted by a polyurethane elastomer layer only. This leads to largely saving the amount of materials used to renew the worn tread portion of the solid tire.

In summary, the renewed solid tire in accordance with the present invention can enjoy a significantly improved life expectancy, and can exhibit a significantly improved shock absorbing or damping effect against shocks exerted from road surface to a body of a vehicle. In addition, no black marks of the tire are left on the road surface, which largely contributes to keeping an aesthetic appearance of the environment and improving a work environment.

In addition, since, according to the present invention, worn solid rubber tires can be utilized again as renewed solid tires, the worn solid rubber tires need not be disposed of, and the social problem with the disposal of waste tires can be overcome.

According to a preferred feature of the first aspect of the present invention, the room temperature-setting polyurethane elastomer layer is formed of a room temperature-setting polyurethane elastomer in which fine air bubbles are dispersed and contained. According to this feature, the fine air bubbles or cells are present in the polyurethane elastomer layer. This leads to effectively increasing the flexibility of the polyurethane elastomer layer and adjusting the hardness of the same. Thus, a shock absorbing or damping property of the polyurethane elastomer layer can be more advantageously improved.

According to another preferred feature of the first aspect of the present invention, the renewed solid tire further comprises an outermost layer which is formed of a different polyurethane elastomer having a higher wear resistance than a wear resistance of the material (i.e., the room temperature-setting polyurethane elastomer) of the polyurethane elastomer layer and which is integrally formed on the polyurethane elastomer layer. According to this feature, the provision of the outermost layer having the excellent wear resistance contributes to improving the durability of the tread portion of the renewed solid tire, and thereby further increasing the life expectancy of the tire. In addition, owing to the provision of the outermost layer, the softness, and the shock absorbing or damping effect, of the room temperature-setting polyurethane elastomer layer can be advantageously improved by adjusting the amount of fine air cells present in the layer.

According to a second aspect of the present invention, there is provided a method of producing a renewed solid tire, as set out in claim 6.

In the renewed solid tire producing method in accordance with the present invention, the room temperature-setting polyurethane elastomer layer can be effectively and integrally formed on a worn surface (i.e., an outer circumferential surface) of a tread rubber of a solid rubber tire. Thus, the worn solid rubber tire can be quickly renewed.

In summary, in the renewed solid tire producing method in accordance with the present invention, the renewed solid tire in which the remaining rubber layer and the polyurethane elastomer layer provided thereon are effectively integrated with each other can be advantageously obtained.

According to a preferred feature of the second aspect of the present invention, the renewed solid tire producing method further comprises a step of applying, before the step of applying the adhesive, a primer to the cut outer circumferential surface of the rubber layer of the worn solid tire. According to this feature, the polyurethane elastomer layer can be more strongly bonded to the rubber layer of the worn solid tire.

### BRIEF DESCRIPTION OF THE DRAWINGS

The above and other objects, features, advantages and technical and industrial significance of the present invention will be better understood by reading the following detailed description of presently preferred embodiments of the invention, when considered in connection with the accompanying drawings, in which:
Fig. 1 is a side elevation view of a portion of a solid rubber tire, for explaining respective states of the tire before and after it is worn;
Fig. 2 is a cross-section view of a portion of a worn solid rubber tire, and a portion of a renewed solid rubber tire in which a room temperature-setting polyurethane elastomer layer is formed integrally with the worn solid rubber tire according to the present invention;
Fig. 3 is a cross-section view of a portion of another renewed solid rubber tire in accordance with the present invention;
Fig. 4 is a cross-section view for explaining steps of a first half portion of a renewed solid tire producing method in accordance with the present invention; and
Fig. 5 is a cross-section view for explaining steps of a second half portion of the renewed solid tire producing method that follows the first half portion shown in Fig. 4.

### DETAILED DESCRIPTION OF THE PREFERRED EMBODIMENTS

Hereinafter, there will be described in detail preferred embodiments of the present invention by reference to the drawings.

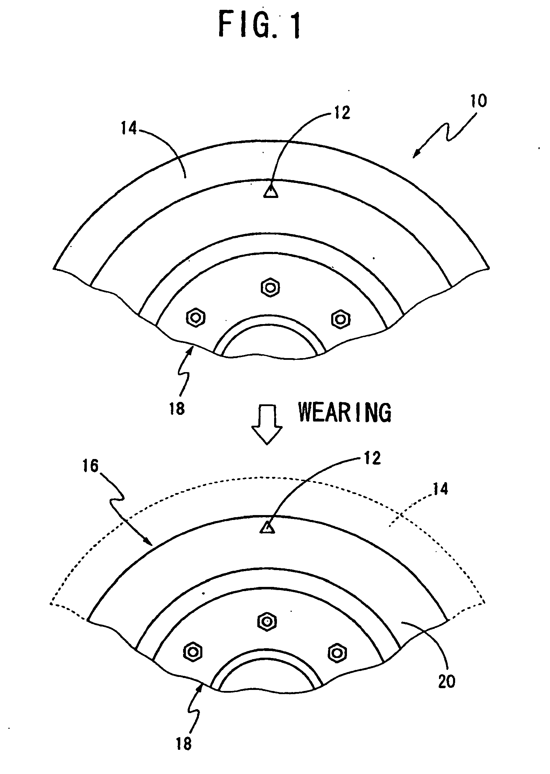

Fig. 1 is a side elevation view of a portion of a solid rubber tire 10 that is attached to a vehicle, not shown, and has not been worn, and a side elevation view of a portion of the same solid rubber tire 10 whose tread portion 14 has been used and worn. More specifically described, the solid rubber tire 10 is formed, as known in the art, of a single sort of rubber, or a blend of two or more sorts of rubbers, that is or are selected from NR, IR, SBR, BR, EPM, EPDM, IIR, and the like. Generally, the solid rubber tire 10 is formed of a blend of rubbers including NR or IR as a main component, and is vulcanized. The solid rubber tire 10 is commercially available as a so-called solid tire. The solid rubber tire 10 has a generally donut-like shape, and an outer circumferential surface of a wheel 18 fixed to an axle shaft of the vehicle is attached to an inner circumferential portion of the tire 10, by a well known method, such as bonding, press-fitting, or fitting.

The solid rubber tire 10 has, on a side surface thereof, a tread wear indicator (or a tire wear indicator) 12 that indicates a limit of use of the tire 10. The tread wear indicator 12 has, e.g., a triangular shape and is formed by indent or relief. When the tread portion 14 of the solid rubber tire 10 is worn little by little because of repeated friction with road surface and eventually the outer circumferential surface of the tread portion 14 that contacts the road surface reaches the tread wear indicator 12, the solid rubber tire 10, i.e., a worn solid rubber tire 16 should be changed with a new one, because a life expectancy of the tire 10 has been fulfilled.

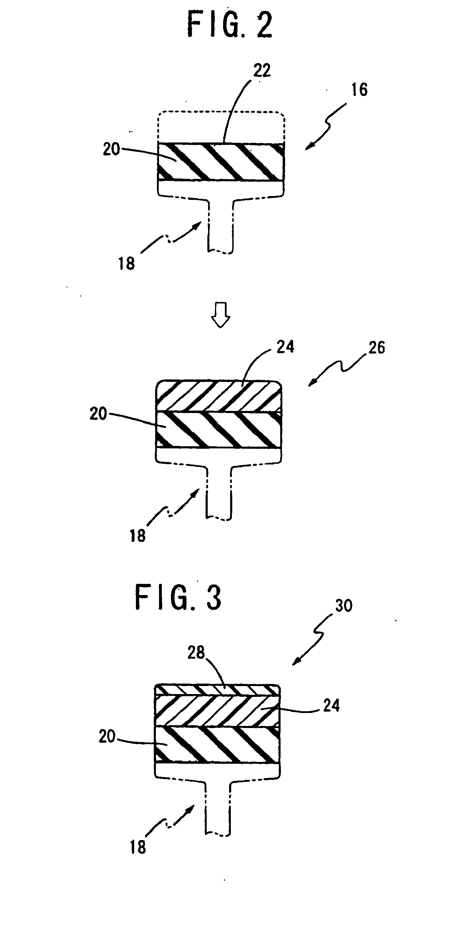

According to the present invention, however, the worn solid rubber tire 16 whose life expectancy has been fulfilled is renewed to advantage. More specifically described, as shown in Fig. 1, the worn solid rubber tire 16 has, as a remaining portion of the solid rubber tire 10, a worn rubber layer 20 that remains along the entire circumference of the wheel 18 and has a pre-determined thickness corresponding to the tread wear indicator 12. As shown in Fig. 2, on an outer circumferential surface of the worn rubber layer 20, a room temperature-curing or -setting polyurethane elastomer layer 24 is integrally formed to have a pre-determined thickness and thereby provide a new tread portion 14. Thus, the worn solid rubber tire 16 is renovated into a renewed solid rubber tire 26 that can be used again with the vehicle.

The above-indicated polyurethane elastomer layer 24 is integrally formed on the outer circumferential surface of the worn rubber layer 20, by casting, into dies, conventionally known raw materials of a room temperature-curing or -setting polyurethane, so that the renewed solid rubber tire 26 may have a desired diameter. Generally, the raw materials of the room temperature-setting polyurethane contain, as a polyisocyanate component, a diphenylmethane diisocyanate (MDI) or its derivatives, such as modified diphenylmethane-4,4-diisocyanate, and additionally contain, as a polyol component, polyether polyol or the like. The raw materials additionally contain an aromatic amine, such as an aromatic primary amine, as a catalyst that causes the polyisocyanate component and the polyol component to quickly react with each other, and cure, at a low temperature. The raw materials can be selected, as needed, from various commercially available products. For example, in the case where a product available under commercial name "BAYTEC" from Bayer AG, Germany, two components react and cure or set at a room temperature of from 10 °C to 50 °C. In this case, about one minute after the two components are mixed with each other, the components react and cure or set to a certain degree; and after they are kept at the room temperature about three days, the reaction substantially ends and provides a polyurethane elastomer having its final properties.

Since the polyurethane elastomer layer 24 is formed using the raw materials of the room temperature-setting polyurethane, the curing or setting of polyurethane does not need to subject the rubber layer 20 of the worn solid rubber tire 16 to high temperatures, thereby effectively preventing the properties of the rubber layer 20 from being changed by, e.g., heat. Therefore, the renewed solid rubber tire 26 in which the above-indicated polyurethane elastomer layer 24 is integrally formed on the rubber layer 20 can advantageously exhibit, against impacts exerted thereto, the cushioning property of the rubber layer 20. In addition, the durability of the rubber layer 20 and accordingly the life expectancy of the renewed solid rubber tire 26 as a whole can be advantageously improved.

Also, in the renewed solid rubber tire 26 constructed as described above, an outer circumferential surface of the polyurethane elastomer layer 24 provides a contact surface that contacts the road surface. Therefore, the polyurethane elastomer can exhibit its proper wear resistance, and accordingly the renewed solid rubber tire 26 can enjoy a significantly improved life expectancy. In addition, since the rubber layer 20 is present under the polyurethane elastomer layer 24 having the excellent wear resistance, the rubber layer 20 can effectively absorb or damp the impacts transmitted from the road surface to the vehicle, even if a hardness of the rubber layer 24 may be such a level of from Shore hardness 80A to 90A. Thus, the rubber layer 20 largely contributes to improving, e.g., a driving comfort of the vehicle. In order to advantageously exhibit the effect of presence of the rubber layer 20, the percentage of the thickness of the polyurethane elastomer layer 24 relative to a whole thickness of the renewed solid rubber tire 26 in the radial direction thereof be not more than 40 %, more preferably, not more than 30 %, and that a percentage of a thickness of the rubber layer 20 relative to the whole thickness of the renewed solid rubber tire 26 be not less than 60 %, more preferably, not less than 70 %.

Moreover, the polyurethane elastomer layer 24 does not contain, unlike the rubber layer 20, any amounts of carbon black as a reinforcing material. Therefore, although the renewed solid rubber tire 26 is rolled and moved on the road surface, no black marks of the tire 26 are left on the road surface. Thus, the polyurethane elastomer layer 24 contributes to keeping the environment clean. In addition, the elastomer layer 24 has no possibilities of damaging a work environment where the renewed solid rubber tires 26 are produced.

The polyurethane elastomer layer 24 may have a foamed structure in which fine air bubbles or cells are contained, so long as the elastomer layer 24 can maintain its excellent wear resistance. In this case, the elastomer layer 24 per se can exhibit a shock absorbing or damping property The foamed structure can be advantageously formed by causing polyurethane raw materials in which fine air bubbles are dispersed and contained, to cure at a room temperature, and the hardness of the polyurethane elastomer layer 24 can be adjusted, as needed, by changing an amount of the fine air cells present in the foamed structure.

According to the present invention, an outermost layer formed of a polyurethane elastomer having an excellent wear resistance may be additionally provided on the outer circumferential surface of the room temperature-setting polyurethane elastomer layer 24 formed on the rubber layer 20, so as to produce a renewed solid rubber tire. An example of this renewed solid rubber tire is shown in Fig. 3. An outermost layer 28 provided on the polyurethane elastomer layer 24 is formed of a polyurethane elastomer having a higher wear resistance than that of the polyurethane elastomer of the layer 24, so as to have a pre-determined thickness. Thus, a renewed solid rubber tire 30 including a tread portion having an integral three-layer structure is produced.

The polyurethane elastomer of the outermost layer 28 is formed using known raw materials of a polyurethane elastomer having an excellent wear resistance. Generally, this elastomer is known as a heat-curing or thermo-setting NDI-based elastomer. More specifically described, naphthalene-1,5-diisocyanate (NDI) is used as a polyisocyanate component, and polyester polyol or the like is used as a polyol component. After the two components are reacted with each other, in advance, so as to form an NDI/ester prepolymer, a glycol cross-linking agent and water are mixed with the prepolymer, so as to form a desired solid NDI-based elastomer or a desired microcellular NDI-based elastomer. Thus, the desired outermost layer 28 is formed by a die-casting method in which the polyurethane raw materials are cast into dies. The polyurethane elastomer having the excellent wear resistance is not limited to the above-indicated heat-curing polyurethane elastomer, but may be a room temperature-setting polyurethane elastomer, so long as the polyurethane elastomer has a desired wear resistance. The raw materials of the polyurethane elastomer are commercially available; for example, polyurethane raw materials available under commercial name "VULKOLLAN" from Bayer AG, Germany, are advantageously used.

Generally, it is preferred that the materials of the heat-curing polyurethane elastomer used to form the outermost layer 28 be reacted, and cured, at a low heating temperature of, e.g., from 70°C to 115°C. This assures that the curing of polyurethane materials does not need to subject the rubber layer 20 of the worn solid rubber tire 16 to high temperatures, thereby effectively preventing the properties of the rubber layer 20 from being changed by heat. Therefore, the renewed solid rubber tire 30 in which the polyurethane elastomer layer 24 and the outermost layer 28 are integrally formed on the rubber layer 20 can advantageously exhibit, against shocks or impacts exerted thereto, the cushioning property of the rubber layer 20. In addition, the durability of the rubber layer 20 and accordingly the life expectancy of the renewed solid rubber tire 30 as a whole can be advantageously improved.

Since the renewed solid rubber tire 30 includes the outermost layer 28 having the excellent wear resistance, the renewed solid tire 30 can enjoy the improved life expectancy. In addition, since the outermost layer 28 is formed to have a higher hardness than that of the polyurethane elastomer layer 24 located inside the layer 28, the renewed solid tire 30 can enjoy an improved wear resistance.

In addition, since the outermost layer 28 is provided outside the polyurethane elastomer layer 24 having the foamed structure, the foamed structure can be improved by the outermost layer 28, so that the hardness of the foamed structure can be lowered. Consequently not only the rubber layer 20 but also the polyurethane elastomer layer 24 can contribute to absorbing or damping the shocks or impacts exerted from the road surface to the renewed solid rubber tire 30.

The renewed solid rubber tire 26, 30 constructed as described above according to the present invention is produced by a renewed solid tire producing method also according to the present invention. The renewed solid tire producing method is based on a known method, e.g., a die-casting method. In the renewed solid tire producing method, before the desired room temperature-setting polyurethane elastomer layer 24 is formed, the outer circumferential surface 22 of the rubber layer 20 of the worn solid rubber tire 16 is worked, i.e., cut or machined using, e.g., a lathe so as to remove, from the rubber layer 20, a superficial portion thereof having a pre-determined thickness. Thus, oil adhered to the outer surface, and/or impregnated into, the inner mass, of the rubber layer 20, and/or particles biting into the outer surface of the same 20 are removed to assure that the polyurethane elastomer layer 24 can be more effectively bonded to the clean outer surface 22 of the rubber layer 20. On the clean outer surface 22 of the rubber layer 20, a primer layer is formed using a known primer to improve a degree of bonding of the outer surface 22, and additionally an adhesive layer is formed, on the primer layer, using a known adhesive suitable for polyurethanes. Since the primer layer and the adhesive layer are formed on the outer surface 22 of the rubber layer 20, the polyurethane elastomer layer 24 can be more firmly bonded to the rubber layer 20.

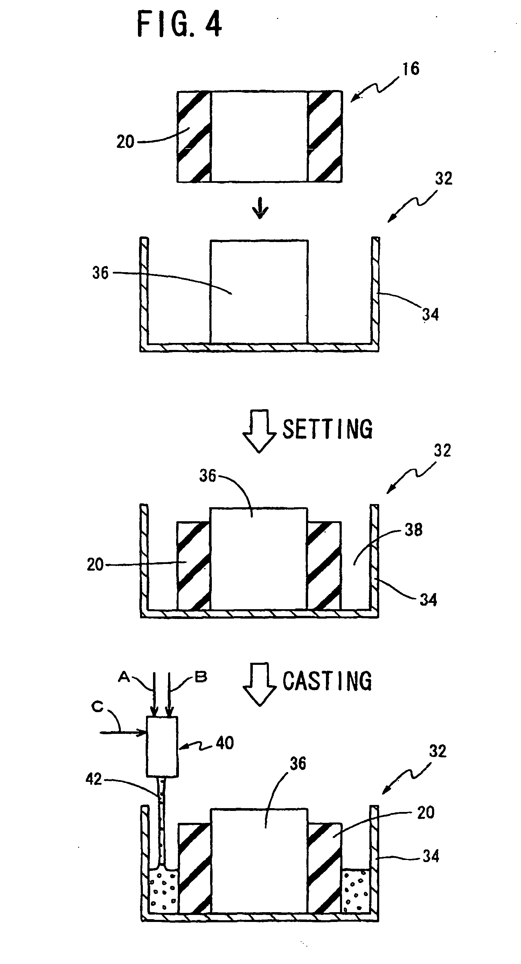

After the primer and then the adhesive are applied to the rubber layer 20, the worn solid rubber tire 16 including the worn rubber layer 20 is set in an appropriate die casting device 32. Subsequently, as shown in Fig. 4, raw materials of a room temperature-setting polyurethane are cast in the die-casting device 32.

More specifically described, as shown in Fig. 4, the die-casting device 32 includes an outer die 34 having a cylindrical shape and including a bottom wall, and a core-like inner die 36 that is provided in an inner space of the outer die 34 such that the inner die 36 is concentric with the outer die 34. The worn solid rubber tire 16 is set in the die-casting device 32 such that the inner die 36 fits in an inner bore of the tire 16. In this state, a known material casting device 40 casts raw materials 42 of a room temperature-setting polyurethane, into an annular space (i.e., a molding space) 38 located between the outer circumferential surface of the rubber layer 20 of the worn solid rubber tire 16 and the inner circumferential surface of the outer die 34, till the annular space 38 is filled with the raw materials. The material casting device 40 may be one that has a well known construction; such as a mixing head or a gun-type injector. The material casting device 40 is supplied with the polyisocynate component: A, and the polyol component: B, mixed with the curing agent (i.e., the catalyst) and, after the two components are mixed uniformly using an appropriate dynamic or static mixer, the mixture is cast in the die-casting device 32. The material casting device 40 is optionally supplied with compressed air: C. In the case where the compressed air: C is introduced into the polyurethane raw materials 42, fine air bubbles or cells are dispersed and contained in the raw materials 42.

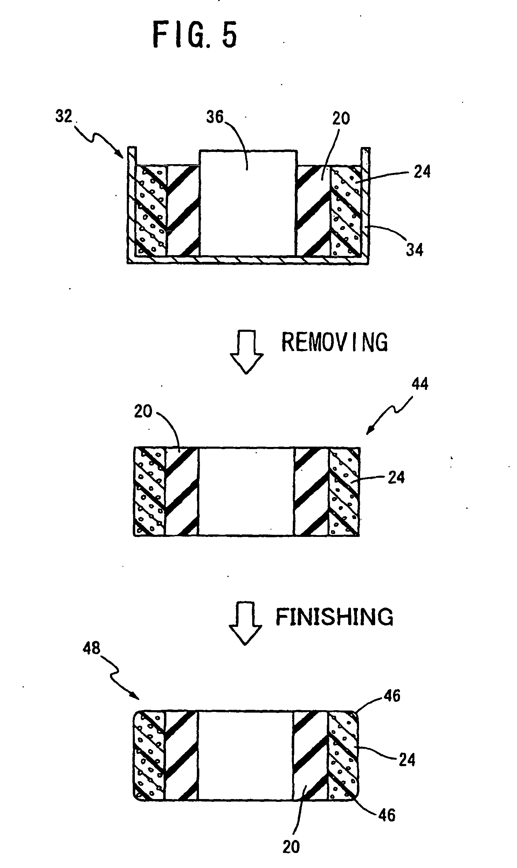

The polyurethane raw materials 42 cast in the die-casting device 32 react and cure at a room temperature. Thus, the polyurethane elastomer layer 24, optionally having a foamed structure in which fine air cells are dispersed, is integrally formed on the outer surface of the rubber layer 20. Subsequently, as shown in Fig. 5, an integral mold product 44 including the rubber layer 20 and the polyurethane elastomer layer 24 is removed from the die-casting device 32, and is subjected to a finishing operation. More specifically described, widthwise opposite ends of an outer circumferential surface of the polyurethane elastomer layer 24 are rounded to provide rounded portions 46, and are thereby prevented from being chipped off in use. Thus, a desired renewed solid tire 48 is produced.

In the above-described method of producing the renewed solid tire 48, the polyurethane raw materials 42 are just cast in the die casting device 32, so as to integrally form the polyurethane elastomer layer 24 on the outer circumferential surface of the rubber layer 20. Thus, the renewed solid tire 48 can be very easily produced. In addition, not all portions of the renewed solid tire 48 are formed of the polyurethane elastomer, but just the polyurethane elastomer layer 24 is integrally formed on the outer surface of the worn rubber layer 20 remaining with the pre-determined thickness along the entire circumference of the wheel 18. Thus, the present renewed solid tire producing method is economical since the amount of use of the polyurethane raw materials 42 is considerably small. In the embodiment shown in Figs. 4 and 5, the polyurethane raw materials 42 are supplied with the compressed air: C, so that the raw materials 42 react and cure in the state in which fine air bubbles are introduced and dispersed. Thus, the polyurethane elastomer layer 24 in which fine air cells are contained is formed. Since the hardness of the polyurethane elastomer layer 24 changes depending upon the amount of fine air cells contained by the same 24, the hardness of the layer 24 can be advantageously adjusted by changing the amount of compressed air: C introduced into the raw materials 42.

In the embodiment, shown in Fig. 3, in which the outermost layer 28 having the excellent wear resistance is formed on the polyurethane elastomer layer 24, the integral mold product 44, shown in Fig. 5, may be used. More specifically described, the integral mold product 44 is set in another die-casting device, not shown, having a greater size corresponding to a desired outer diameter of the renewed solid rubber tire 30, and appropriate polyurethane raw materials are cast in an annular molding space provided around the outer circumferential surface of the polyurethane elastomer layer 24, in the same manner in which the layer 24 is formed. In the case where the polyurethane raw materials are of a heat curing sort, the die-casting device and/or the integral mold product 44 may be heated, in advance, before the raw materials are cast, or may be heated to an effective temperature at which the raw materials can react, after they are cast.

The renewed solid tire 48 produced by the method shown in Figs. 4 and 5 is attached to the wheel 18, and is used with the vehicle, such that the wheel 18 is fixed to the inner bore of the tire 48 by a conventionally known method such as bonding, press-fitting, or fitting. Thus, the renewed solid tire 48 can enjoy the above-described special advantages of the polyurethane elastomer layer 24 formed on the rubber layer 20.

While the present invention has been described in its preferred embodiments, it is to be understood that the present invention is by no means limited to the details of those embodiments but may be otherwise embodied.

For example, the worn solid tires 16 employed according to the present invention may be waste solid tires obtained by recovery of so-called solid rubber tires, i.e., common rubber-based solid tires that are widely used in forklift trucks, industrial tractors, battery carriers, trailers, or the like. In addition, the worn solid tires 16 may be solid tires that are formed of a common solid rubber and are used as, e.g., wheels of a cart or casters of a baggage. Moreover, the worn solid tires 16 may be pneumatic-type solid tires or cylindrical-base-type solid tires, and the present invention is applicable to the respective solid-rubber portions of those tires.

In each of the illustrated embodiments, the worn solid rubber tire 16 whose life expectancy has been fulfilled is used to produce the renewed solid tire 26, 30, 48. However, it is possible to use, for producing a renewed solid tire, a worn solid rubber tire that has been worn to a certain degree but has not fulfilled its life expectancy, i.e., has not reached the tread wear indicator 12 yet.

In the renewed solid tire producing method shown in Figs. 4 and 5, the worn solid rubber tire 16 is detached from the wheel 18, and subsequently is set in the die-casting device 32, and then the polyurethane elastomer layer 24 is integrally formed on the outer circumferential surface of the rubber layer 20 of the tire 16. However, it is possible to set, in the die-casting device 32, the worn solid rubber tire 16 that is not detached from the wheel 18 but remains attached to the wheel 18, and integrally form the polyurethane elastomer layer 24 on the outer surface of the rubber layer 20 of the tire 16.

The polyurethane raw materials 42 used to form the polyurethane elastomer layer 24 do not contain any amounts of carbon black as a reinforcing material, but may contain one or more known additives such as a coloring agent to add a desired color to the elastomer layer 24; an antibacterial agent to give an antibacterial activity to the layer 24; a photocatalyst; or an ultraviolet-ray absorbing agent.

## Claims

1. A renewed solid tire (26, 30, 48), comprising:
a worn solid tire (16) including a remaining rubber layer (20); and
a room temperature-setting polyurethane elastomer layer (24) which is provided on an outer circumferential surface (22) of the rubber layer;
**characterized in that**
said polyurethane elastomer layer (24) extends around the whole outer circumferential surface (22) of said rubber layer (20); and
the percentage of the thickness of said polyurethane elastomer layer (24) relative to a whole thickness of the renewed solid tire in the radial direction thereof is not more than 40%.

2. The renewed solid tire according to claim 1, wherein said polyurethane elastomer layer (24) is formed of a room temperature-setting polyurethane elastomer in which fine air bubbles are dispersed and contained.

3. The renewed solid tire according to claim 1 or claim 2, further comprising, in addition to said polyurethane elastomer layer (24), an outermost layer (28) which is formed of a polyurethane elastomer having a wear resistance higher than the wear resistance of said polyurethane elastomer layer (24) and which is provided on said polyurethane elastomer layer (24).

4. The renewed solid tire according to any one of claims 1 to 3, wherein said polyurethane elastomer layer (24) is formed by reacting and setting of a diphenylmethane diisocyanate or its derivatives as a polyisocyanate component and a polyether polyol or the like as a polyol component at a room temperature of 10°C to 50 °C.

5. The renewed solid tire according to claim 3, wherein said polyurethane elastomer of the outermost layer (28) is a thermo-setting NDI-based polyurethane elastomer.

6. A method of producing a renewed solid tire (48), the method comprising the steps of
cutting an outer circumferential surface (22) of a remaining rubber layer (20) of a worn solid tire (16);
applying an adhesive to the cut outer circumferential surface of the rubber layer (20); and
providing, on the outer circumferential surface of the rubber layer, a room temperature-setting polyurethane elastomer layer (24) by causing raw materials of a room temperature-setting polyurethane to react and cure, wherein
said polyurethane elastomer layer (24) extends around the whole outer circumferential surface (22) of said rubber layer (20) ; and
the percentage of the thickness of said polyurethane elastomer layer (24) relative to a whole thickness of the renewed solid tire in the radial direction thereof is not more than 40%.

7. The method according to claim 6, further comprising a step of applying, before the step of applying the adhesive, a primer to the cut outer circumferential surface (22) of the rubber layer (20) of the worn solid tire (16).

## Patentansprüche

1. Erneuerter Vollreifen (26, 30, 48), umfassend:
einen gebrauchten Vollreifen (16), umfassend eine verbleibende Gummischicht (20); und
eine Kalthärtungs-Polyurethanelastomerschicht (24), welche an einer Außenumfangsoberfläche (22) der Gummischicht bereitgestellt ist;
**dadurch gekennzeichnet, dass**
sich die Polyurethanelastomerschicht (24) um die gesamte Außenumfangsoberfläche (22) der Gummischicht (20) erstreckt und
der Prozentanteil der Dicke der Polyurethanelastomerschicht (24) relativ zu der Gesamt-Dicke des erneuerten Vollreifens in Radialrichtung desselben nicht mehr als 40 % beträgt.

2. Erneuerter Vollreifen nach Anspruch 1, worin die Polyurethanelastomerschicht (24) aus einem Kalthärtungs-Polyurethanelastomer gebildet ist, in dem feine Luftbläschen dispergiert und enthalten sind.

3. Erneuerter Vollreifen nach Anspruch 1 oder 2, ferner umfassend, zusätzlich zur Polyurethanelastomerschicht (24), eine äußerste Schicht (28), die aus einem Polyurethanelastomer gebildet ist, die eine höhere Verschleißfestigkeit als die Verschleißfestigkeit der Polyurethanelastomerschicht (24) aufweist und welche auf der Polyurethanelastomerschicht (24) bereitgestellt ist.

4. Erneuerter Vollreifen nach einem der Ansprüche 1 bis 3, worin die Poryurethanelastomerschicht (24) durch Reagieren und Härten eines Diphenylmethan-Diisocyanats oder dessen Derivaten als Polyisocyanatkomponente und eines Polyetherpolyols oder Ähnlichem als Polyolkomponente bei einer Umgebungstemperatur von 10°C bis 50°C ausgebildet ist.

5. Erneuerter Vollreifen nach Anspruch 3, worin das Polyurethanelastomer der äußersten Schicht (28) ein wärmehärtendes Polyurethanelastomer auf NDI-Basis ist.

6. Verfahren zur Herstellung eines erneuerten Vollreifens (48), wobei das Verfahren folgende Schritte umfasst
Schneiden einer Außenumfangsoberfläche (22) einer verbleibenden Gummischicht (20) eines gebrauchten Vollreifens (16);
Auftragen eines Haftmittels auf die geschnittene Außenumfangsoberfläche der Gummischicht (20); und
Bereitstellen einer Kalthärtungs-Polyurethanelastomerschicht (24) auf der Außenumfangsoberfläche der Gummischicht, durch Herbeiführen der Reaktion und Aushärtung von Rohmaterialien eines Kalthärtungs-Polyurethanelastomers, worin
die Polyurethanelastomerschicht (24) sich um die gesamte Außenumfangsoberfläche (22) der Gummischicht (20) erstreckt; und
der Prozentanteil der Dicke der Polyurethanelastomerschicht (24) relativ zu der Gesamt-Dicke des erneuerten Vollreifens in Radialrichtung desselben nicht mehr als 40 % beträgt.

7. Verfahren nach Anspruch 6, ferner umfassend - vor dem Schritt des Auftragen des Klebemittels - einen Schritt des Auftragens einer Grundierungsschicht auf die geschnittene Außenumfangsoberfläche (22) der Gummischicht (20) des gebrauchten Vollreifens (16).

## Revendications

1. Pneumatique plein rechapé (26, 30, 48) comprenant :
un pneumatique plein usé (16) comprenant une couche
de caoutchouc (20) ; et
une couche d'élastomère de polyuréthanne durcissant à la température ambiante (24) qui est prévue sur une circonférence externe (22) de la couche de caoutchouc ;
**caractérisé en ce que**
ladite couche d'élastomère de polyuréthanne (24) s'étend tout autour de la surface circonférentielle externe (22) de ladite couche de caoutchouc (20) ; et
le pourcentage de l'épaisseur de ladite couche d'élastomère de polyuréthanne (24) relativement à l'épaisseur totale du pneumatique plein rechapé dans sa direction radiale ne dépasse pas 40%.

2. Pneumatique plein rechapé selon la revendication 1, où ladite couche d'élastomère de polyuréthanne (24) est formée d'un élastomère de polyuréthanne durcissant à température ambiante dans lequel sont dispersés des contenus de fines bulles d'air.

3. Pneumatique plein rechapé selon la revendication 1 ou la revendication 2, comprenant de plus, en addition à ladite couche d'élastomère de polyuréthanne (24), une couche plus externe (28) qui est formée d'un élastomère de polyuréthanne ayant une résistance à l'usure plus importante que la résistance à l'usure de ladite couche d'élastomère de polyuréthanne (24) et qui est prévue sur ladite couche d'élastomère de polyuréthanne (24).

4. Pneumatique plein rechapé selon l'une quelconque des revendications 1 à 3, où ladite couche d'élastomère de polyuréthanne (24) est formée par réaction et prise d'un diphénylméthane diisocyanate ou ses dérivés et d'un composant de polyisocyanate et d'un polyéther polyol ou analogue en tant que composant polyol à une température ambiante de 10°C à 50°C.

5. Pneumatique plein rechapé selon la revendication 3, où ledit élastomère de polyuréthanne de la couche la plus externe (28) est un élastomère de polyuréthanne à base de NDI thermodurcissable.

6. Méthode de production d'un pneumatique plein rechapé (48), la méthode comprenant les étapes de
couper une surface circonférentielle externe (22) d'une couche de caoutchouc résiduel (20) d'un pneumatique plein usé (16) ;
appliquer un adhésif à la surface circonférentielle externe coupée de la couche de caoutchouc (20) ; et
prévoir, sur la surface circonférentielle externe de la couche de caoutchouc une couche d'un élastomère de polyuréthanne durcissant à température ambiante (24) en forçant les matières premières d'un polyuréthanne durcissant à température ambiante à réagir et à durcir, où
ladite couche d'élastomère de polyuréthanne (24) s'étend sur toute la surface circonférentielle externe (22) de ladite couche de caoutchouc (20) ; et
le pourcentage de l'épaisseur de ladite couche d'élastomère de polyuréthanne (24) relativement à l'épaisseur totale du pneumatique solide rechapé dans la direction radiale ne dépasse pas 40%.

7. Méthode selon la revendication 6, comprenant de plus une étape d'appliquer, avant l'étape d'application de l'adhésif, une couche d'apprêt à la couche circonférentielle externe coupée (22) de la couche de caoutchouc (20) du pneumatique plein usé (16).
